# EUROPÄISCHE PATENTANMELDUNG

(11) **EP 4 488 129 A1**
(43) Veröffentlichungstag der Anmeldung: **08.01.2025**
(21) Anmeldenummer: 24180358.4
(22) Anmeldetag: 06.06.2024
(51) Int. Cl.: B60T 8/32, B60T 8/17, B60T 13/26, B60T 13/66, B60T 13/68, B60T 17/04, B60T 17/22

(54) **PNEUMATISCHES VENTILSYSTEM**

(30) Priorität: 03.07.2023 DE 102023206299
(71) Anmelder: ZF CV Systems Global GmbH, 3006 Bern (CH)
(72) Erfinder: Haverkamp, Michael, 30455 Hannover (DE); Brutt, Mirko, 31832 Springe (DE)
(74) Vertreter: ZF Friedrichshafen AG

(57) **Zusammenfassung**

Die Erfindung betrifft ein pneumatisches Ventilsystem (5) für ein Bremssystem eines Zugfahrzeugs. Das pneumatische Ventilsystem (5) umfasst einen Ventilblock (28), der einen Versorgungsdruckeingang (29), einen Zugfahrzeug-Versorgungsdruckausgang (30) und einen Zugfahrzeug-Steuerdruckausgang (32) aufweist, sowie ein Steuerventil (6), ein Redundanzventil (7) und ein Bremsventil (10). Das pneumatisches Ventilsystem (5) ermöglicht durch Verbindungen der Ventile sowie des Versorgungsdruckausgangs und Ausgänge miteinander auf sehr kompakte und stabile Weise insbesondere eine redundante Druckversorgung eines Bremszylinders einer Feststellbremse des Zugfahrzeugs.

## Beschreibung

Die Erfindung betrifft ein pneumatisches Ventilsystem für ein Bremssystem eines Zugfahrzeugs.

Die JP 2004217009 A2 lehrt eine Vorrichtung zum Lösen einer negativen Feststellbremse, um die Bremskraft in Notfällen, z.B. bei Beschädigung eines Hydraulikkreises und Ausfall eines Schalters, schnell aufheben zu können. Dabei wird eine Lösevorrichtung für eine negative Feststellbremse vorgeschlagen, die in einem Bremssystem mit zwei Hydraulikkreisen zur Zufuhr von Drucköl von einer Hydraulikpumpe zu einer Betriebsbremse installiert ist. Die Lösevorrichtung umfasst zwei elektromagnetische Umschaltventile zum Verbinden und Unterbrechen von Drucköl, das von den jeweiligen Hydraulikkreisen in die negative Feststellbremse eintritt. Ferner umfasst die Lösevorrichtung zwei Betätigungsabschnitte zum Ausgeben eines Verbindungs- oder Unterbrechungsbefehls des Drucköls an entsprechende elektromagnetische Wahlventile. Zusätzlich umfasst die Lösevorrichtung ein Hochdruckauswahlventil zur Auswahl eines hochdruckseitigen Drucköls in Druckölen, die aus den jeweiligen Öldrucckreisen in die negative Feststellbremse fließen.

Eine Aufgabe der vorliegenden Erfindung kann darin gesehen werden, eine redundante Druckversorgung in einem pneumatischen Bremssystem auf besonders kompakte und stabile Weise bereitzustellen. Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Die vorliegende Erfindung schlägt eine Ventilstruktur bzw. eine Ventilanordnung für ein Steuerungssystem einer pneumatischen Parksperre vor. Die Ventilstruktur ermöglicht über ein Redundanzventil eine redundante und damit sichere Druckluftversorgung eines Bremszylinders einer Parksperre, wenn das Steuerventil ausfallen sollte. Dazu notwendige Ventile, Verbindungen bzw. Leitungen und Anschlüsse (Eingänge und Ausgänge) können insbesondere in oder an einem Ventilblock angeordnet sein. Diese Integration in einem Ventilblock bietet eine kompakte Bauweise und erfordert lediglich eine Befestigungsmöglichkeit für den Ventilblock (mit entsprechender Festigkeit des Ventilblocks). Es müssen nicht länger für jedes der Ventile eine eigene Halterung im Fahrzeug angebracht werden. Dies erspart weiteren Bauraum, da nicht länger die Abmessungen der einzelnen Ventile und deren erforderliche Befestigungsmöglichkeiten ausschlaggebend sind und im Vergleich zur Summe der Einzelgeräte eine kompaktere Bauweise möglich ist. Weiterhin wird die Stabilität im Vergleich zu einzelnen Ventile erhöht, die meist nicht stabil genug sind, um zusammen mit anderen Geräten befestigt zu werden (Bruchgefahr).

In diesem Sinne wird erfindungsgemäß ein pneumatisches Ventilsystem für ein Bremssystem eines Zugfahrzeugs bereitgestellt. Das pneumatische Ventilsystem umfasst einen Ventilblock, der einen Versorgungsdruckeingang, einen Zugfahrzeug-Versorgungsdruckausgang und einen Zugfahrzeug-Steuerdruckausgang aufweist. Weiterhin umfasst das pneumatische Ventilsystem ein als Steuerventil ausgebildetes erstes Wegeventil, ein als Redundanzventil ausgebildetes zweites Wegeventil und ein als Bremsventil ausgebildetes drittes Wegeventil. Der Ventilblock bildet insbesondere in seinem Inneren Kanäle, welche den Versorgungsdruckeingang mit den Wegeventilen, mit dem Zugfahrzeug-Versorgungsdruckausgang und mit dem Zugfahrzeug-Steuerdruckausgang sowie mit äquivalenten Ausgängen für ein weiter unten beschriebenes Anhängersteuerventilsystem verbinden. Die Wegeventile sind insbesondere in dem Ventilblock oder an einer äußeren Oberfläche des Ventilblocks angeordnet. Auch der Versorgungsdruckeingang und die Versorgungs- sowie Steuerdruckausgänge sind insbesondere an einer äußeren Oberfläche des Ventilblocks angeordnet. Der Ventilblock kann beispielsweise durch ein gegossenes Bauteil gebildet werden.

Über den Versorgungsdruckeingang kann dem pneumatischen Ventilsystem Versorgungsdruckluft zugeführt werden. Über die Versorgungsdruckausgänge kann die Versorgungsdruckluft in Richtung wenigstens eines Bremszylinders einer Feststellbremse des Zugfahrzeugs oder einer Anhängerbremse zugeführt werden. Unter "Versorgungsdruckluft" ist insbesondere Luft zu verstehen, die unter einem ausreichend hohen Betätigungsdruck steht, um in dem Bremszylinder der Feststellbremse des Zugfahrzeugs einen ausreichend hohen Deaktivierungsdruck aufzubauen, sodass die Feststellbremse des Zugfahrzeugs deaktiviert wird, wodurch die Feststellbremse ein Rad des Zugfahrzeugs nicht festsetzt. Weiterhin kann die Versorgungsdruckluft dazu genutzt werden, um die Anhängerbremse zu betätigen (direkt oder invers). Über die Steuerluftausgänge kann das pneumatische Ventilsystem Steuerluft ausgeben, insbesondere an ein Zugfahrzeug-Relaisventil oder an das Anhängersteuerventilsystem. Unter "Steuerluft" ist insbesondere Luft zu verstehen, die unter einem ausreichend hohen Steuerdruck steht, um einen Ventilschieber des Zugfahrzeug-Relaisventils des Bremssystems des Zugfahrzeugs oder des Anhängersteuerventilsystems zu verschieben. Der Steuerdruck der Steuerluft ist insbesondere geringer als ein Versorgungsdruck, unter dem die Versorgungsdruckluft steht. Der Steuerdruck reicht insbesondere nicht dazu aus, um in dem Bremszylinder den Deaktivierungsdruck aufzubauen.

Der Versorgungsdruckeingang ist dazu eingerichtet mit einer Druckluftquelle des Bremssystems verbunden zu werden. Unter dem Merkmal "verbunden" ist insbesondere zu verstehen, dass die jeweils miteinander verbundenen Elemente pneumatisch leitend miteinander verbunden sind, d.h. dass Druckluft von dem einen Element zu dem anderen Element strömen kann und ggfs. umgekehrt. Die Druckmittelquelle ist dazu eingerichtet, unter Druck stehende Druckluft zu bevorraten. Die Druckmittelquelle (z.B. ein Tank oder ein Akkumulator) ist dazu eingerichtet, die bevorratete Druckluft auszugeben, um den Bremszylinder des Zugfahrzeugs und/oder die Anhängerbremse des von dem Zugfahrzeug gezogenen Anhängefahrzeugs zu betätigen. Wenn die Zündung des Zugfahrzeugs eingeschaltet ist, kann ein Antriebsmotor des Zugfahrzeugs eine Befüllung der Druckmittelquelle bewirken, z.B. indem ein Kompressor angetrieben wird, der Luft ansaugt, verdichtet und der Druckmittelquelle zuführt.

Das Bremsventil ist einerseits, insbesondere stromaufwärts, über ein Wechselventil mit dem Steuerventil und mit dem Redundanzventil sowie andererseits, insbesondere stromabwärts, mit dem Zugfahrzeug-Steuerdruckausgang verbunden. Der Versorgungsdruckeingang ist mit dem Steuerventil und mit dem Redundanzventil verbunden, sodass Druckluft aus der Druckluftquelle über das Steuerventil oder das Redundanzventil und stromabwärts über das Bremsventil zu dem Zugfahrzeug-Steuerdruckausgang strömen kann. Über das Redundanzventil kann auch dann noch Druckluft strömen und über das Wechselventil sowie das Bremsventil an den Zugfahrzeug-Steuerdruckausgang geleitet werden, wenn eine Steuerung des Steuerventils ausfällt, sodass über das Steuerventil keine Druckluft strömt. Somit wird eine Redundante Steuerung der Feststellbremse über den Zugfahrzeug-Steuerdruckausgang ermöglicht.

Der Versorgungsdruckeingang ist weiterhin mit dem Zugfahrzeug-Versorgungsdruckausgang verbunden. Ferner ist der Zugfahrzeug-Versorgungsdruckausgang dazu eingerichtet, mit einem Versorgungsdruckeingang eines Zugfahrzeug-Relaisventils zur Betätigung eines Bremszylinders des Zugfahrzeugs verbunden zu werden. Durch die Verbindungsmöglichkeit mit dem Zugfahrzeug-Relaisventil können kleine Vorsteuerventile zur Steuerung des externen Relais anstelle von Standardventilen mit großem Durchflussdurchmesser verwendet werden, was eine verbesserte Verpackung und Kostenreduzierung ermöglicht. Außerdem ist der Zugfahrzeug-Steuerdruckausgang dazu eingerichtet, mit einem Steuerdruckeingang des Zugfahrzeug-Relaisventils verbunden zu werden. Somit kann das pneumatische Ventilsystem an seinem Ventilblock in besonders kompakter und stabiler Weise alle Anschlüsse bereitstellen, die notwendig sind, um ein Relaisventil zur Betätigung eines Bremszylinders mit Versorgungsdruckluft und Steuerluft zu versorgen.

Im Falle eines Bruches oder Risses einer Verbindungsleitung zwischen dem Anhängefahrzeug-Versorgungsdruckausgang und einem Versorgungsdruckeingang des Anhängersteuerventilsystems oder einer anderen mit dem Anhängersteuerventilsystem verbundenen Leitung kann dies zu einer Leckage in der Druckluftversorgung der Bremszylinder des Zugfahrzeugs führen. Infolgedessen kann der Luftdruck, der an dem Zugfahrzeug-Versorgungsdruckausgang anliegt, auf einen derart niedrigen Wert fallen, der zu einer automatischen Aktivierung der Feststellbremsanlage führen würde. Um dies zu vermeiden kann ein Rückschlagventil den Druck im Feststellbremssystem des Zugfahrzeugs aufrechterhalten, so dass das Zugfahrzeug für kurze Zeit - ohne dass die Feststellbremse aktiviert ist - weiterfahren kann, bis ein sicherer Halt des Fahrzeugs möglich ist. In diesem Sinne ist gemäß einer weiteren Ausführungsform vorgesehen, dass der Ventilblock ein Rückschlagventil aufweist, welches den Versorgungsdruckeingang mit dem Steuerventil und dem Redundanzventil verbindet, sodass Druckluft aus der Druckluftquelle über das Steuerventil oder das Redundanzventil und stromabwärts über das Bremsventil zu dem Zugfahrzeug-Steuerdruckausgang strömen kann.

Weiterhin verbindet das Rückschlagventil den Versorgungsdruckeingang mit dem Zugfahrzeug-Versorgungsdruckausgang und trennt in umgekehrter Strömungsrichtung den Zugfahrzeug-Versorgungsdruckausgang von dem Versorgungsdruckeingang. Insbesondere ist ein Eingang des Rückschlagventils mit dem Versorgungsdruckeingang und ein Ausgang des Rückschlagventils mit dem Zugfahrzeug-Versorgungsdruckausgang verbunden. Das Rückschlagventil bewirkt, dass aus der Druckluftquelle kommende Druckluft über den Versorgungsdruckeingang des Ventilblocks und das Rückschlagventil zu dem Zugfahrzeug-Versorgungsdruckausgang des Ventilblocks strömen kann. Dahingegen wird insbesondere von dem Zugfahrzeug-Versorgungsdruckausgang kommende Druckluft daran gehindert, über das Rückschlagventil zu dem Versorgungsdruckeingang zu strömen. Das Gleiche gilt für Druckluft, die aus der Richtung des Steuerventils und des Redundanzventils kommt. Über das Redundanzventil kann auch dann noch Druckluft strömen und über das Wechselventil sowie das Bremsventil an den Zugfahrzeug-Steuerdruckausgang geleitet werden, wenn eine Steuerung des Steuerventils ausfällt, sodass über das Steuerventil keine Druckluft strömt. Somit wird eine Redundante Steuerung der Feststellbremse über den Zugfahrzeug-Steuerdruckausgang ermöglicht. Das Rückschlagventil ermöglicht weiterhin eine Einbindung des pneumatischen Ventilsystems in einen Druckkreislauf ("Kreislauf 3") einer Bremsanlage zusammen mit der Versorgung des Anhängersteuerventils, da der Feststellbremskreis über das Rückschlagventil in der Versorgung gesichert ist. Das Rückschlagventil ist insbesondere zwischen dem Versorgungsdruckeingang einerseits und dem Zugfahrzeug-Versorgungsdruckausgang sowie dem Steuerventil und dem Redundanzventil andererseits angeordnet.

Gemäß einer weiteren Ausführungsform ist vorgesehen, dass der Ventilblock einen Anhängefahrzeug-Versorgungsdruckausgang und einen Anhängefahrzeug-Steuerdruckausgang aufweist, wobei der Anhängefahrzeug-Versorgungsdruckausgang unter Umgehung des Rückschlagventils mit dem Versorgungsdruckeingang verbunden ist, und wobei der Anhängefahrzeug-Versorgungsdruckausgang dazu eingerichtet ist, mit einem Versorgungsdruckeingang eines Anhängersteuerventilsystems für die Anhängerbremse des Anhängefahrzeugs verbunden zu werden, welches von dem Zugfahrzeug gezogen wird. Der Anhängefahrzeug-Steuerdruckausgang ist einerseits - insbesondere stromaufwärts - über das Wechselventil mit dem Steuerventil und mit dem Redundanzventil verbunden, und andererseits dazu eingerichtet, mit einem Steuerdruckeingang des Anhängersteuerventilsystems verbunden zu werden (insbesondere stromabwärts. Über das Redundanzventil kann in dieser Ausführungsform auch dann noch Druckluft strömen und über das Wechselventil sowie das Bremsventil an den Anhängefahrzeug-Steuerdruckausgang geleitet werden, wenn eine Steuerung des Steuerventils ausfällt, sodass über das Steuerventil keine Druckluft strömt. Somit ist auch für die Anhängerbremse eine Redundanz gegeben. Durch die zusätzliche Integration des Anhängefahrzeug-Versorgungsdruckausgangs und des Anhängefahrzeug-Steuerdruckausgangs in den Ventilblock kann nochmals der Bauraum reduziert werden, wobei gleichzeitig die Befestigungsstabilität der Ventile erhöht werden kann.

Insbesondere alle pneumatischen Anschlüsse (Eingänge und Ausgänge) können auf derselben Seite des Ventilblocks platziert werden. Dies ermöglicht nochmals kleinere Einbauräume im Vergleich zum Einbau von Einzelkomponenten. In diesem Sinne ist gemäß einer weiteren Ausführungsform vorgesehen, dass der Versorgungsdruckeingang, der Zugfahrzeug-Versorgungsdruckausgang, der Zugfahrzeug-Steuerdruckausgang, der Anhängefahrzeug-Versorgungsdruckausgang und der Anhängefahrzeug-Steuerdruckausgang auf ein- und derselben Außenfläche des Ventilblocks angeordnet sind.

Die Steuerung insbesondere des Steuerventils des Redundanzventils und des Bremsventils erfolgt bevorzugt elektronisch, um letztendlich auch eine elektronische Steuerung der Feststellbremse des Zugfahrzeugs und der Anhängerbremse des Anhängefahrzeugs zu ermöglichen. Diese elektronische Steuerung erfordert keine zusätzlichen Kabel oder Leitungen oder Ventile innerhalb einer Fahrerkabine des Zugfahrzeugs. Dies reduziert den Montageaufwand und ermöglicht eine Geräuschreduzierung. Das Ventilpaket wird dabei über ein externes Steuergerät angesteuert, das über CAN-Bus oder bereits vorhandene Verkabelung aus der Kabine mit dem Ventilsystem zur Aktivierung der Feststellbremse kommuniziert. Weiterhin wird eine Verwendung für fahrerunabhängige Assistenz- und Sicherheitsfunktionen ermöglicht, wie sie für autonome Fahrzeuge benötigt werden. In diesem Sinne ist gemäß einer Ausführungsform vorgesehen, dass das pneumatische Ventilsystem weiterhin eine elektronische Steuerungseinheit umfasst, die über elektronische Steuerungsleitungen mit dem Steuerventil, dem Redundanzventil und dem Bremsventil verbunden ist.

Das Steuerventil, das Redundanzventil und das Bremsventil sind Magnetventile, die jeweils einen Elektromagneten aufweisen. Die elektronische Steuerungseinheit ist dazu eingerichtet, die Elektromagnete derart zu steuern, dass das Steuerventil und das Redundanzventil aus einem mechanisch vorgespannten geschlossenen Zustand in einen geöffneten Zustand und umgekehrt versetzt werden, und das Bremsventil aus einem mechanisch vorgespannten geöffneten Zustand in einen geschlossenen Zustand und umgekehrt versetzt wird. Mit anderen Worten sind das Steuerventil und das Redundanzventil insbesondere in einem geschlossenen Zustand mechanisch vorgespannt (""normally closed). Wenn sich das Steuerventil und das Redundanzventil in dem geschlossenen Zustand befinden, dann strömt keine Druckluft aus der Druckluftquelle über das Steuerventil und das Redundanzventil zu dem Wechselventil. Weiterhin kann insbesondere von dem Wechselventil kommende Druckluft über das Steuerventil und das Redundanzventil in eine drucklose Umgebung entweichen, wenn sich das Steuerventil und das Redundanzventil in dem geschlossenen Zustand befinden.

Das Steuerventil und das Redundanzventil können entgegen der mechanischen Vorspannung in einen geöffneten Zustand versetzt werden. Insbesondere weisen das Steuerventil und das Redundanzventil dazu einen Elektromagneten auf, der bestromt werden kann, sodass ein Magnetfeld aufgebaut wird, welches einen Ventilschieber des Steuerventils und des Redundanzventils entgegen der mechanischen Vorspannung in eine geöffnete Schaltstellung verschiebt, was einer geöffneten Stellung des Steuerventils und des Redundanzventils entspricht. Die Bestromung der Elektromagnete kann insbesondere durch eine elektronische Steuerungseinheit des Bremssystems erfolgen. Die elektronische Steuerungseinheit kann dazu über elektronische Steuerleitungen mit den Elektromagneten des Steuerungsventils und des Redundanzventils verbunden sein. Wenn sich das Steuerventil und das Redundanzventil in dem geöffneten Zustand befinden, dann strömt Druckluft aus der Druckluftquelle über das Steuerventil und das Redundanzventil zu dem Wechselventil.

Das Bremsventil ist insbesondere in einem geöffneten Zustand mechanisch ("normally open") vorgespannt. Wenn sich das Bremsventil in dem geöffneten Zustand befindet, dann strömt von dem Wechselventil kommende Druckluft über das Bremsventil zu dem Zugfahrzeug-Steuerdruckausgang. Das Bremsventil kann entgegen der mechanischen Vorspannung in einen geschlossenen Zustand versetzt werden. Insbesondere weist das Bremsventil dazu einen Elektromagneten auf, der bestromt werden kann, sodass ein Magnetfeld aufgebaut wird, welches einen Ventilschieber des Bremsventils entgegen der mechanischen Vorspannung in eine geschlossene Schaltstellung verschiebt, was einer geschlossenen Stellung des Bremsventils entspricht. Wenn sich das Bremsventil in dem geschlossenen Zustand befinden, dann kann von dem Zugfahrzeug-Steuerdruckausgang kommende Druckluft über das Bremsventil direkt in die drucklose Umgebung entweichen.

Weiterhin kann das Ventilsystem eine Testfunktion der Feststellbremse ermöglichen, gemäß welcher der Fahrer prüfen möchte, ob das volle Fahrzeuggespann aus Zugfahrzeug und Anhängefahrzeug nur mit den Feststellbremsen des Zugfahrzeugs an einer Steigung gehalten werden kann. Über eine Schnittstelle in der Kabine kann der Fahrer diese Funktion aktivieren. Das Steuerventil und das Redundanzventil bleiben dazu aktiviert, d.h. sie verbleiben in ihrem geöffneten Zustand, sodass die Anhängerbremse weiterhin gelöst bleibt. Das Bremsventil wird in die geschlossene Position geschaltet. Dadurch wird der Druck in den Federspeicherbremszylindern des Zugfahrzeugs abgelassen und die Feststellbremsen aktiviert, sodass eine Bremsung mittels des Zugfahrzeugs durchgeführt wird. In diesem Sinne ist gemäß einer weiteren Ausführungsform vorgesehen, dass die elektronische Steuerungseinheit nach Empfangen einer Bremstestanforderung dazu eingerichtet ist, die Elektromagnete des Steuerventils und des Redundanzventils derart zu steuern, dass das Steuerventil und das Redundanzventil in den geöffneten Zustand versetzt werden. Weiterhin ist die elektronische Steuerungseinheit nach Empfangen der Bremstestanforderung dazu eingerichtet, den Elektromagneten des Bremsventils derart zu steuern, dass das Bremsventil in den geschlossenen Zustand versetzt wird, sodass die Anhängerbremse deaktiviert und die Feststellbremse des Zugfahrzeugs aktiviert wird.

Das pneumatische Ventilsystem kann zum einen in einen sogenannten unbetätigten Zustand versetzt werden. Dabei wird der Versorgungsdruckeingang durch das Luftversorgungssystem des Zugfahrzeugs mit Druckluft versorgt bzw. mit Druck beaufschlagt. Dadurch werden auch der Zugfahrzeug-Versorgungsdruckausgang und der Anhängefahrzeug-Versorgungsdruckausgang mit Druckluft versorgt bzw. mit Druck beaufschlagt. Der Zugfahrzeug-Steuerdruckausgang und der Anhängefahrzeug-Druckausgang hingegen werden nicht mit Druckluft versorgt bzw. nicht mit Druck beaufschlagt, indem das Steuerventil und das Redundanzventil in den geschlossenen Zustand versetzt werden. Durch eine invertierte Funktion der Bremszylinder und der Anhängerbremse ergibt sich dadurch eine aktive Feststellbremswirkung. In diesem Sinne ist gemäß einer weiteren Ausführungsform vorgesehen, dass die elektronische Steuerungseinheit dazu eingerichtet ist, die Elektromagnete des Steuerventils und des Redundanzventils derart zu steuern, dass das Steuerventil und das Redundanzventil in den geschlossenen Zustand versetzt werden, sodass keine Druckluft aus der Druckmittelquelle über das Steuerventil oder das Redundanzventil und stromabwärts zum einen zu dem Anhängefahrzeug-Steuerdruckausgang und zum anderen über das Bremsventil zu dem Zugfahrzeug-Steuerdruckausgang strömen kann, wodurch die Feststellbremse des Zugfahrzeugs und die Anhängerbremse aktiviert werden können.

Zum anderen kann das pneumatische Ventilsystem in einen sogenannten betätigten Zustand versetzt werden. Dabei wird der Versorgungsdruckeingang durch das Luftversorgungssystem des Zugfahrzeugs mit Druckluft versorgt bzw. mit Druck beaufschlagt. Dadurch werden auch der Zugfahrzeug-Versorgungsdruckausgang und der Anhängefahrzeug-Versorgungsdruckausgang mit Druckluft versorgt bzw. mit Druck beaufschlagt. Der Zugfahrzeug-Steuerdruckausgang und der Anhängefahrzeug-Druckausgang werden mit Druckluft versorgt bzw. mit Druck beaufschlagt, indem das Steuerventil und das Redundanzventil in den geöffneten Zustand versetzt werden und das Bremsventil in seinem mechanisch vorgespannten geöffneten Zustand belassen wird. Durch die invertierte Funktion der Bremszylinder und der Anhängerbremse ergibt sich dadurch eine inaktive Feststellbremswirkung. In diesem Sinne ist gemäß einer weiteren Ausführungsform vorgesehen, dass die Elektromagnete des Steuerventils und des Redundanzventils derart zu steuern, dass das Steuerventil und das Redundanzventil in den geöffneten Zustand versetzt werden, sodass Druckluft aus der Druckmittelquelle über das Steuerventil oder das Redundanzventil und stromabwärts zum einen zu dem Anhängefahrzeug-Steuerdruckausgang und zum anderen über das Bremsventil zu dem Zugfahrzeug-Steuerdruckausgang strömen kann, wodurch die Feststellbremse des Zugfahrzeugs und die Anhängerbremse deaktiviert werden können.

Weiterhin kann eine Vereinheitlichung von Bauteilen dahingehend vorgenommen werden, dass drei Mal dasselbe Magnetventil verwendet wird. In diesem Sinne ist gemäß einer weiteren Ausführungsform vorgesehen, dass es sich bei dem Steuerventil, bei dem Redundanzventil und bei dem Bremsventil um Gleichteile handelt. Der normal geschlossene Zustand (Steuerventil, Redundanzventil) und normal geöffnete Zustand (Bremsventil) kann dabei über mechanische Eigenschaften innerhalb des Ventilblocks realisiert werden.

Ferner kann vorgesehen sein, dass alle drei Magnetventile betätigt werden, sobald die Feststellbremsanlage geschaltet wird, um das Anhängersteuerventil und die Federspeicherbremszylinder zu entlüften. In der Folge entlüftet entweder das Steuerventil oder das Redundanzventil den Steuerdruck für das Anhängersteuerventilsystem und das Bremsventil die Leitungen zur Betätigung des Relaisventils und damit der Federspeicherbremsen des Zugfahrzeugs. Der Vorteil liegt darin, dass vorhandene Ventile genutzt werden können, um das Ansprechverhalten des Systems zu erhöhen. In diesem Sinne ist gemäß einer weiteren Ausführungsform vorgesehen, dass die elektronische Steuerungseinheit dazu eingerichtet ist, die Elektromagnete des Steuerventils und des Redundanzventils derart zu steuern, dass das Steuerventil und das Redundanzventil in den geschlossenen Zustand versetzt werden, sodass der Anhängefahrzeug-Steuerdruckausgang über das Steuerventil oder das Redundanzventil mit einer drucklosen Umgebung verbunden wird. Weiterhin ist die elektronische Steuerungseinheit dazu eingerichtet, den Elektromagneten des Bremsventils derart zu steuern, dass das Bremsventil in den geschlossenen Zustand versetzt wird, sodass der Zugfahrzeug-Steuerdruckausgang mit der drucklosen Umgebung verbunden wird.

Außerdem kann das Zugfahrzeug-Relaisventil zusammen mit einem Schnellentlüftungsventil verwendet werden. Um die Geschwindigkeit der Druckentlastung größerer Volumina (z.B. im Bereich der Federbremszylinder des Zugfahrzeugs) zu erhöhen, kann der Einsatz eines solchen Schnellentlüftungsventils von Vorteil sein. Das Schnellentlüftungsventil ist dazu eingerichtet, Druckluft aus dem Bremszylinder direkt in die drucklose Umgebung abzulassen. Das Schnellentlüftungsventil kann beispielsweise vom Einleitertyp sein. Insbesondere ist das Schnellentlüftungsventil zwischen einem Relaisventil und einem Bremszylinder der Parksperre des Zugfahrzeugs angeordnet oder innerhalb des genannten Relaisventils. Da Schnellentlüftungsventile große Luftdurchlässe bieten und die Möglichkeit besteht, diese Ventile in der Nähe der mit Druck beaufschlagten Volumen zu platzieren, ist eine schnelle Entlüftung möglich, ohne durch kleine Durchflussdurchmesser anderer Ventile oder lange Leitungen dazwischen eingeschränkt zu sein. In diesem Sinne ist gemäß einer weiteren Ausführungsform vorgesehen, dass ein Schnellentlüftungsventil mit dem Zugfahrzeug-Relaisventils verbunden ist, wobei das Schnellentlüftungsventil dazu eingerichtet ist, Druckluft aus dem Bremszylinder direkt in die drucklose Umgebung abzulassen.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: eine Draufsicht auf einen Teil eines Bremssystems für ein Zugfahrzeug und ein Anhängefahrzeug,
- Fig. 2: Details einer erfindungsgemäßen pneumatischen Ventilanordnung des Bremssystems nach Fig. 1 und
- Fig. 3: konstruktive Details der pneumatischen Ventilanordnung nach Fig. 2,

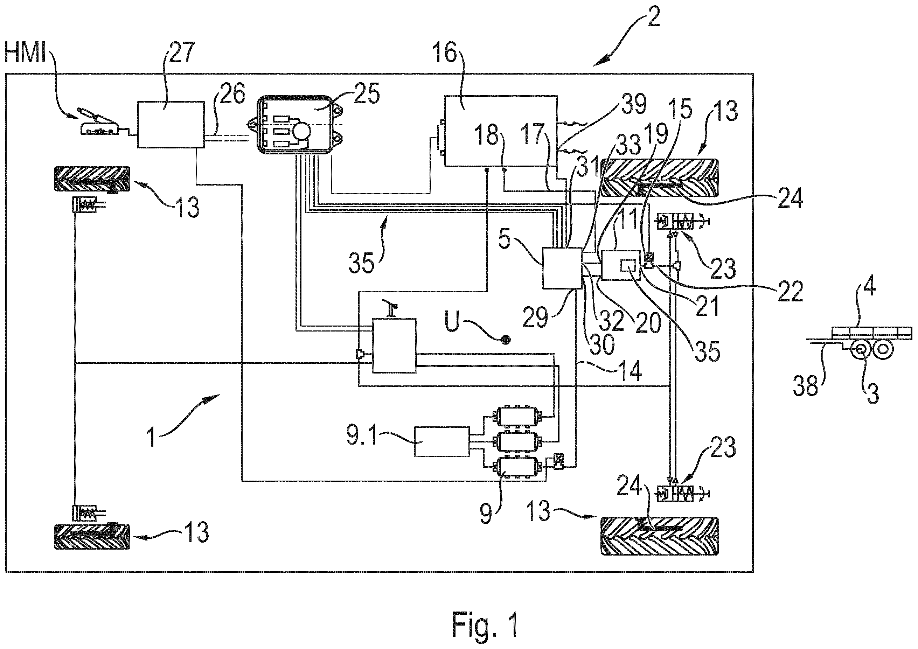

Fig. 1 zeigt einen Teil eines Bremssystems 1 für ein nicht näher dargestelltes Zugfahrzeug 2. Bei dem Zugfahrzeug 2 handelt es sich beispielsweise um ein landwirtschaftliche Nutzfahrzeug, insbesondere um einen Traktor. Das Bremssystem 1 erfüllt insbesondere eine Feststell- bzw. Dauerbremsfunktion ("Parkbremsfunktion") von Rädern 13 des Zugfahrzeugs 2 sowie einer in Fig. 1 lediglich angedeuteten Anhängerbremse 3 eines Anhängefahrzeugs 4. Die im Folgenden näher beschriebenen Funktionen können ein Teil einer Traktor-Bremssystem-Plattform sein. Diese gewährleistet den sicheren Betrieb des Bremssystems 1 bei verschiedenen Ausfallszenarien.

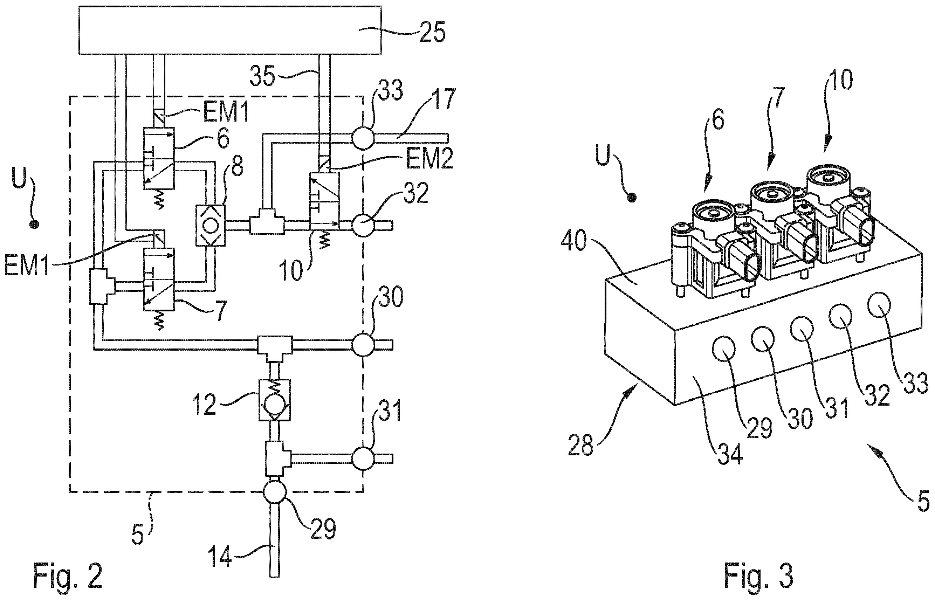

Das Bremssystem 1 umfasst ein elektronisch steuerbares Festellbremsmodul in Form einer pneumatischen Ventilanordnung 5, deren Einzelheiten durch Fig. 2 und Fig. 3 gezeigt sind. Die pneumatische Ventilanordnung 5 umfasst ein als Steuerventil 6 ausgebildetes erstes 3/2-Magnet-Wegeventil, ein als Redundanzventil 7 ausgebildetes zweites 3/2-Magnet-Wegeventil, ein druckgesteuertes Wechselventil 8, ein als Bremsventil 10 ausgeführtes 3/2-Magnet-Wegeventil und ein Rückschlagventil 12. Stromabwärts der pneumatischen Ventilanordnung 5 sind ein Zugfahrzeug-Relaisventil 11 und ein Drucksensor 15 angeordnet. Das Steuerventil 6 und das Redundanzventil 7 des Feststellbremsmoduls 5 werden eingangsseitig über eine Versorgungsleitung 14 und über das Rückschlagventil 12 von einer Druckmittelquelle 9 mit pneumatischem Druckmittel in Form von Druckluft versorgt. Auch das Zugfahrzeug-Relaisventil 11 wird eingangsseitig über die Versorgungsleitung 14 und über das Rückschlagventil 12 von der Druckmittelquelle 9 mit Druckluft versorgt. Die Druckmittelquelle 9 kann einen Kompressor 9.1 umfassen, welcher von einer nicht gezeigten Antriebsmaschine bzw. von einem Motor (z.B. ein Verbrennungskraftmotor oder ein Elektromotor) des Zugfahrzeugs 2 angetrieben werden kann, wenn eine Zündung des Zugfahrzeugs 2 eingeschaltet ist.

Das Steuerventil 6 und das Redundanzventil 7 sind in einer pneumatischen Parallelschaltung jeweils eingangsseitig über die Versorgungsleitung 14 und das Rückschlagventil 12 mit der Druckmittelquelle 9 verbunden. Das Wechselventil 8 ist eingangsseitig mit jeweils einem Ausgang des Steuerventils 6 und des Redundanzventils 7 verbunden. Ausgangsseitig ist das Wechselventil 8 mit einem Eingang des Bremsventils 10 sowie über eine Verbindungsleitung 17 mit einem ersten Eingang 18 (Steuerdruckeingang) eines Anhängersteuerventilsystems 16 verbunden. Somit kann der jeweils höhere Druck der beiden Ventile 6, 7 über den Ausgang des Wechselventils 8 in Richtung des Bremsventils 10 und des ersten Eingangs 18 des Anhängersteuerventilsystems 16 ausgegeben werden.

Ein Steuerdruckeingang 19 des Relaisventils 11 ist mit einem Ausgang des Bremsventils 10 verbunden. Ein Versorgungsdruckeingang 20 des Relaisventils 11 ist über das Rückschlagventil 12 und die Versorgungsleitung 14 mit der Druckmittelquelle 9 verbunden. Ein Druckausgang 21 des Relaisventils 11 ist über eine Bremszylinderleitung 22 mit zwei Bremszylindern 23 zur Betätigung jeweils einer Feststellbremse 24 verbunden. Der Drucksensor 15 ist in der Bremszylinderleitung 22 angeordnet und misst den darin vorherrschenden Druck, welcher als repräsentativ für einen Druck innerhalb der Bremszylinder 23 angesehen werden kann. Der Drucksensor 15 übermittelt den gemessenen Druck an eine elektronische Steuerungseinheit 25 des Bremssystems 1. Die elektronische Steuerungseinheit 25 ist weiterhin über elektronische Steuerungsleitungen 35 mit dem Steuerventil 6, mit dem Redundanzventil 7 und mit dem Bremsventil 10 verbunden. Der besseren Übersichtlichkeit halber ist in Fig. 2 lediglich eine der elektronischen Steuerleitungen mit einem Bezugszeichen versehen. Die elektronischen Steuerleitungen 35 können im Bereich der pneumatischen Ventilanordnung 5 insbesondere in und/oder an einem weiter unten näher beschriebenen Ventilblock 28 verlaufen.

Bei dem Steuerventil 6 und bei dem Redundanzventil 7 handelt es sich in dem gezeigten Ausführungsbeispiel um Gleichteile, was jedoch nicht zwingend ist. Auch das Bremsventil 10 kann gleich aufgebaut sein wie das Steuerventil 6 und/oder das Redundanzventil 7. Ein Ventilschieber des Steuerventils 6 und des Redundanzventils 7 ist jeweils in einem nicht dargestellten Ventilgehäuse durch ein Federelement in einer geschlossenen Schaltstellung vorgespannt ("normally closed"), was einem durch Fig. 2 gezeigten geschlossenen Zustand des Steuerventils 6 und des Redundanzventils 7 entspricht. Wenn sich das Steuerventil 6 und das Redundanzventil 7 in dem geschlossenen Zustand befinden, dann wird keine Druckluft aus der Druckmittelquelle 9 über das Steuerventil 6 und das Redundanzventil 7 in Richtung des Wechselventils 8, des weiter stromabwärts angeordneten Bremsventils 10 und eines weiter unten beschriebenen Zugfahrzeug-Steuerdruckausgangs 32 sowie in Richtung des weiter stromabwärts angeordneten Zugfahrzeug-Relaisventils 11 geleitet. Somit liegt kein Steuerdruck an dem Steuerdruckeingang 19 des Relaisventils 11 an, wodurch das Relaisventil 11 keine Druckluft, die an dem Versorgungsdruckeingang 20 anliegt, über den Druckausgang 21 in die Bremszylinderleitung 22 fördert. Folglich werden die Bremszylinder 23 nicht mit Druckluft gefüllt, wodurch in den Bremszylindern 23 kein Deaktivierungsdruck aufgebaut wird, sodass die Parksperren 24 aktiviert werden bzw. bleiben. Die Räder 13 des Kraftfahrzeugs 2 sind bzw. bleiben dann durch die Parksperren 24 festgestellt.

Das Steuerventil 6 und das Redundanzventil 7 weisen Elektromagnete EM1 auf, die bestromt werden können, sodass die Ventilschieber aus der geschlossenen Schaltstellung in eine geöffnete Schaltstellung verschoben werden, was einem geöffneten Zustand des Steuerventils 6 und des Redundanzventils 7 entspricht. Das Bestromen der Elektromagneten EM1 erfolgt durch die oder zumindest gesteuert von der elektronischen Steuerungseinheit 25. Wenn sich das Steuerventil 6 und das Redundanzventil 7 in dem geöffneten Zustand befinden, dann wird Druckluft aus der Druckmittelquelle 9 über das Steuerventil 6 und das Redundanzventil 7 geleitet und kann über das Wechselventil 8 sowie das weiter stromabwärts angeordnete Bremsventil 10 und den Zugfahrzeug-Steuerdruckausgang 32 dem Steuerdruckeingang 19 des Relaisventils 11 zugeführt werden. Wenn das Steuerventil 6 ausfällt, dann kann der Druck des Redundanzventils 7 weiter genutzt werden, sofern das Redundanzventil 7 nicht ausgefallen ist. Wenn das Redundanzventil 7 ausfällt, dann kann der Druck des Steuerventils 6 weiter genutzt werden, sofern das Steuerventil 6 nicht ausgefallen ist.

Ein Ventilschieber des Bremsventils 10 ist innerhalb dessen Ventilgehäuse durch ein Federelement in einer durch Fig. 2 gezeigten geöffneten Schaltstellung vorgespannt ("normally open"), was einem geöffneten Zustand des Bremsventils 10 entspricht. Wenn sich das Bremsventil 10 in dem geöffneten Zustand befinden, dann wird Druckluft, die aus der Druckmittelquelle 9 über das geöffnete Steuerventil 6 oder das geöffnete Redundanzventil 7 sowie das Wechselventil 8 geleitet worden ist, über das Bremsventil 10 dem Steuerdruckeingang 19 des Zugfahrzeug-Relaisventils 11 zugeführt. In diesem Fall fördert das Zugfahrzeug-Relaisventil 11 Druckluft, die an dem Versorgungsdruckeingang 20 anliegt, über den Druckausgang 21 in die Bremszylinderleitung 22. Folglich werden die Bremszylinder 23 mit Druckluft gefüllt, wodurch in den Bremszylindern 23 ein Deaktivierungsdruck aufgebaut wird, sodass die Parksperren 24 deaktiviert werden. Die Räder 13 des Zugfahrzeugs 2 sind dann nicht länger durch die Parksperren 24 festgestellt.

Die elektronische Steuerungseinheit 25 kann eine Bestromung eines Elektromagneten EM2 des Bremsventils 10 derart steuern, dass der Ventilschieber des Bremsventils 10 aus der geöffneten Schaltstellung in eine geschlossene Schaltstellung verschoben wird, was einem geschlossenen Zustand des Bremsventils 10 entspricht. Wenn sich das Bremsventil 10 in dem geschlossenen Zustand befindet, dann kann Druckluft aus den Bremszylindern 23 über das Zugfahrzeug-Relaisventil 11 und das Bremsventil 10 in eine drucklose Umgebung U entweichen, sodass der Deaktivierungsdruck abgebaut wird und die Parksperre 24 aktiviert wird. Die Räder 13 des Zugfahrzeugs 2 sind dann festgestellt. Man kann in diesem Zusammenhang davon sprechen, dass die Ventilanordnung 5 eine invertierende Schaltcharakteristik aufweist. Die Parksperren 24 des Zugfahrzeugs 2 werden betätigt, wenn über das Zugfahrzeug-Relaisventil 11 kein Druck ausgegeben wird, sowie gelöst, wenn über das Zugfahrzeug-Relaisventil 11 ein ausreichend hoher Druck ausgegeben wird, der zu dem Deaktivierungsdruck innerhalb der Bremszylinder 23 führt.

Weiterhin ermöglicht die pneumatische Ventilanordnung 5 eine Testfunktion der Feststellbremse 24, gemäß welcher ein Fahrer des Zugfahrzeugs 2 prüfen möchte, ob das volle Fahrzeuggespann aus Zugfahrzeug 2 und Anhängefahrzeug 4 allein mit den Feststellbremsen 24 des Zugfahrzeugs 2 an einer Steigung gehalten werden kann. Über die Mensch-Maschine-Schnittstelle HMI in der Kabine kann der Fahrer diese Funktion aktivieren, wobei eine Bremstestanforderung an die elektronische Steuerungseinheit 25 übermittelt wird. Die elektronische Steuerungseinheit 25 steuert daraufhin die Elektromagneten EM1 des Steuerventils 6 und des Redundanzventils 7 derart, dass das Steuerventil 6 und das Redundanzventil 7 in den geöffneten Zustand versetzt werden, sodass an dem ersten Eingang 18 des Anhängersteuerventilsystem Druck anliegt und die Anhängerbremse 3 weiterhin gelöst bleibt.

Auch die Anhängerbremse 3 des Anhängefahrzeugs weist somit eine invertierte Schaltcharakteristik auf. Die Anhängerbremse 3 wird nicht betätigt bzw. gelöst, wenn an dem ersten Eingang 18 des Anhängersteuerventilsystems 16 Druck anliegt, sowie betätigt bzw. angezogen, wenn an dem ersten Eingang 18 des Anhängersteuerventilsystems 16 kein Druck anliegt. Weiterhin steuert die elektronische Steuerungseinheit 25 den Elektromagneten EM2 des Bremsventils 10 derart, dass das Bremsventil 10 in den geschlossenen Zustand versetzt wird. Dadurch wird der Druck in den Federspeicherbremszylindern 23 des Zugfahrzeugs 2 über das Bremsventil 10 in die drucklose Umgebung U abgelassen und die Feststellbremsen 24 werden aktiviert, sodass eine Bremsung mittels des Zugfahrzeugs 2 durchgeführt wird.

Fig. 1 zeigt, dass die elektronische Steuerungseinheit 25 des Bremssystems 1 über einen CAN BUS 26 mit einer elektronischen (Haupt-)Steuerungseinheit 27 des Zugfahrzeugs 2 verbunden sein kann. Die elektronische (Haupt-)Steuerungseinheit 27 des Zugfahrzeugs 2 ist in dem gezeigten Ausführungsbeispiel insbesondere mit einer Mensch-Maschine-Schnittstelle HMI in einer Fahrerkabine des Zugfahrzeugs 2 verbunden. Mittels der Mensch-Maschine-Schnittstelle HMI kann ein Fahrer oder Nutzer des Zugfahrzeugs 2 die Bremszylinder 23 des Zugfahrzeugs 2 und/oder die Anhängerbremse 3 des Anhängefahrzeugs 4 bedienen. Wenn die Parksperren 24 im Normalbetrieb betätigt bzw. aktiviert werden sollen, d.h. wenn sich die elektronische Steuerungseinheit 25 in einem aktiven Zustand befindet, dann werden das Steuerventil 6 und das Redundanzventil 7 deaktiviert, d.h. in den geschlossenen Zustand versetzt, sodass die Bremszylinder 23 über das Relaisventil 11 sowie das deaktivierte Bremsventil 10 entlüftet werden können. Wenn das Bremsventil 10 deaktiviert ist, befindet es sich in dem geöffneten Zustand, sodass Druckmittel aus dem Bremszylinder 23 über das Zugfahrzeug-Relaisventil 11, das Bremsventil 10, das Wechselventil 8, das Steuerventil 6 und das Redundanzventil 7 in die drucklose Umgebung U entweichen kann.

Fig. 2 und 3 zeigen, dass die pneumatische Ventilanordnung 5 einen Ventilblock 28 umfasst, der einen Versorgungsdruckeingang 29, einen Zugfahrzeug-Versorgungsdruckausgang 30, einen Anhängefahrzeug-Versorgungsdruckausgang 31, einen Zugfahrzeug-Steuerdruckausgang 32 und einen Anhängefahrzeug-Steuerdruckausgang 33 aufweist. In dem durch Fig. 3 gezeigten Ausführungsbeispiel sind der Versorgungsdruckeingang 29, der Zugfahrzeug-Versorgungsdruckausgang 30, der Zugfahrzeug-Steuerdruckausgang 32, der Anhängefahrzeug-Versorgungsdruckausgang 31 und der Anhängefahrzeug-Steuerdruckausgang 33 auf derselben seitlichen Außenfläche 34 des Ventilblocks 28 angeordnet. Gemäß Fig. 3 ist der Ventilblock beispielhaft Quaderförmig mit vier seitlichen Außenflächen 34, wobei die genannten Anschlüsse 29 bis 33 auf derselben seitlichen Außenfläche 34 angeordnet sind. Das Steuerventil 6, das Redundanzventil 7 und das Bremsventil 10 sind in dem Ausführungsbeispiel nach Fig. 3 nebeneinander auf einer oberen Außenfläche 40 des quaderförmigen Ventilblocks 28 angeordnet und dort mit dem Ventilblock 28 befestigt. Der Ventilblock 28 bildet in seinem Inneren Kanäle bzw. pneumatische Leitungen aus, welche die Anschlüsse 29 bis 33 sowie die Ventile 6 bis 8 sowie 10 und 12 miteinander verbinden.

Der Versorgungsdruckeingang 29 ist stromaufwärts über die Versorgungsleitung 14 mit der Druckluftquelle 9 verbunden. Stromabwärts ist der Versorgungsdruckeingang 29 - insbesondere innerhalb des Ventilblocks 28 - über das Rückschlagventil 12 mit dem Zugfahrzeug-Versorgungsdruckausgang 30 verbunden. In umgekehrter Strömungsrichtung trennt das Rückschlagventil 12 den Zugfahrzeug-Versorgungsdruckausgang 30 von dem Versorgungsdruckeingang 29. Dazu ist ein Eingang des Rückschlagventils 12 mit dem Versorgungsdruckeingang 29 und ein Ausgang des Rückschlagventils 12 mit dem Zugfahrzeug-Versorgungsdruckausgang 30 verbunden. Das Rückschlagventil 12 bewirkt, dass aus der Druckluftquelle 9 kommende Druckluft über den Versorgungsdruckeingang 29 und das Rückschlagventil 12 zu dem Zugfahrzeug-Versorgungsdruckausgang 30 strömt. Dahingegen wird von dem Zugfahrzeug-Versorgungsdruckausgang 30 kommende Druckluft daran gehindert, über das Rückschlagventil 12 zu dem Versorgungsdruckeingang 29 zu strömen. Das Gleiche gilt für Druckluft, die aus der Richtung des Steuerventils 6 und des Redundanzventils 7 kommt. Der Anhängefahrzeug-Versorgungsdruckausgang 31 ist stromaufwärts unter Umgehung des Rückschlagventils 12 mit dem Versorgungsdruckeingang 29 verbunden. Stromabwärts ist der Anhängefahrzeug-Versorgungsdruckausgang mit einem Versorgungsdruckeingang 39 des Anhängersteuerventilsystems 16 für die Anhängerbremse 3 des Anhängefahrzeugs 4 verbunden, welches von dem Zugfahrzeug 2 gezogen wird.

Der Versorgungsdruckeingang 29 ist weiterhin über das Rückschlagventil 12 mit dem Steuerventil 6 und mit dem Redundanzventil 7 verbunden. Innerhalb der pneumatischen Ventilanordnung 5 ist das Bremsventil 10 stromaufwärts einerseits über das Wechselventil 8 mit dem Steuerventil 6 und mit dem Redundanzventil 7 verbunden. Stromabwärts ist das Bremsventil 10 mit dem Zugfahrzeug-Steuerdruckausgang 32 verbunden. Der Zugfahrzeug-Versorgungsdruckausgang 30 wiederum ist gemäß Fig. 1 stromabwärts mit dem Versorgungsdruckeingang 20 des Zugfahrzeug-Relaisventils 11 zur Betätigung des Bremszylinders 23 des Zugfahrzeugs 2 verbunden. Durch diese Verbindungen kann Druckluft aus der Druckluftquelle 9 über das Steuerventil 6 oder das Redundanzventil 7 (je nachdem welcher Luftdruck größer ist, wird einer der beiden Druckluftströme über das Wechselventil 8 geleitet) und stromabwärts über das Bremsventil 10 zu dem Zugfahrzeug-Steuerdruckausgang 32 strömen.

Der Zugfahrzeug-Steuerdruckausgang 32 ist mit dem Steuerdruckeingang 19 des Zugfahrzeug-Relaisventils 11 verbunden, sodass das Zugfahrzeug-Relaisventil 11 zur Bedruckung der Bremszylinder 23 und dadurch auch zur Betätigung der Feststellbremsen 24 gesteuert werden kann. Weiterhin ist auch der Anhängefahrzeug-Steuerdruckausgang 33 stromaufwärts über das Wechselventil 8 mit dem Steuerventil 6 oder dem Redundanzventil 7 verbunden, sodass auch an dem Anhängefahrzeug-Steuerdruckausgang 33 der höhere Luftdruck anliegt. Stromabwärts ist der Anhängefahrzeug-Steuerdruckausgang 33 mit dem ersten Druckeingang 18 des Anhängersteuerventilsystems 16 verbunden, um insbesondere ein Relaisventil des Anhängersteuerventilsystems 16 zur Steuerung der Anhängerbremse 3 zu bedrucken. Die vorstehend beschriebenen Verbindungen können durch Kanäle realisiert werden, die innerhalb des Ventilblocks verlaufen. Auch das das Rückschlagventil 12 kann in den Ventilblock 28 integriert werden.

Weiterhin ist vorgesehen, dass alle drei Magnetventile 6, 7, 10 betätigt werden, sobald die Feststellbremsanlage 24 geschaltet wird, um das Anhängersteuerventilsystem 16 und die Federspeicherbremszylinder 23 zu entlüften. In der Folge entlüftet entweder das Steuerventil 6 oder das Redundanzventil 7 den Steuerdruck für das Anhängersteuerventilsystem 16 und das Bremsventil 10 die Leitungen zur Betätigung des Relaisventils 11 und damit der Federspeicherbremsen 23 des Zugfahrzeugs 2. Dazu steuert die elektronische Steuerungseinheit 25 die Elektromagnete EM1 des Steuerventils 6 und des Redundanzventils 7 derart, dass das Steuerventil 6 und das Redundanzventil 7 in den geschlossenen Zustand versetzt werden, sodass der Anhängefahrzeug-Steuerdruckausgang 33 über das Steuerventil 6 oder das Redundanzventil 7 mit der drucklosen Umgebung U verbunden wird. Weiterhin steuert die elektronische Steuerungseinheit 25 den Elektromagneten EM2 des Bremsventils 10 derart, dass das Bremsventil 10 in den geschlossenen Zustand versetzt wird, sodass der Zugfahrzeug-Steuerdruckausgang 32 ebenfalls mit der drucklosen Umgebung U verbunden wird.

Um die Geschwindigkeit der Druckentlastung größerer Volumina in den Federbremszylindern 23 weiter zu erhöhen, ist gemäß dem Ausführungsbeispiel nach Fig. 1 ein Schnellentlüftungsventil 36 vorgesehen, welches in das Zugfahrzeug-Relaisventil 11 integriert ist. Das Schnellentlüftungsventil 35 ist vom Einleitertyp und kann ähnlich wie ein Rückschlagventil mit einem ersten Eingang (verbunden mit dem Versorgungsdruckeingang 20 des Zugfahrzeug-Relaisventils 11) einem zweiten Eingang (verbunden mit den beiden Bremszylindern 23) und einem dritten Eingang (verbunden mit der drucklosen Umgebung U) aufgebaut sein. Die Entlüftung des Schnellentlüftungsventils 36 ist dabei geschlossen, solange der erste Anschluss unter Druck steht. Sobald jedoch der erste Anschluss drucklos ist, öffnet der Druck an dem zweiten Anschluss den Durchgang zwischen dem zweiten Anschluss und dem dritten Anschluss (Auslass), sodass der Ausgang des Schnellentlüftungsventils 36 entlüftet wird.

### Bezugszeichen

- EM1: Elektromagnet Steuerventil/Redundanzventil
- EM2: Elektromagnet Bremsventil
- HMI: Mensch-Maschine-Schnittstelle
- U: drucklose Umgebung

- 1: Bremssystem
- 2: Zugfahrzeug
- 3: Anhängerbremse
- 4: Anhängefahrzeug
- 5: Festellbremsmodul/pneumatische Ventilanordnung
- 6: Steuerventil
- 7: Redundanzventil
- 8: Wechselventil
- 9: Druckmittelquelle
- 9.1: Kompressor
- 10: Bremsventil
- 11: Zugfahrzeug-Relaisventil
- 12: Rückschlagventil
- 13: Räder
- 14: Versorgungsleitung
- 15: Drucksensor
- 16: Anhängersteuerventilsystem
- 17: Verbindungsleitung
- 18: erster Eingang Anhängersteuerventilsystem
- 19: Steuerdruckeingang Zugfahrzeug-Relaisventil
- 20: Versorgungsdruckeingang Zugfahrzeug-Relaisventil
- 21: Druckausgang Zugfahrzeug-Relaisventil
- 22: Bremszylinderleitung
- 23: Bremszylinder
- 24: Feststellbremse
- 25: elektronische Steuerungseinheit
- 26: CAN BUS
- 27: elektronischen (Haupt-)Steuerungseinheit
- 28: Ventilblock
- 29: Versorgungsdruckeingang
- 30: Zugfahrzeug-Versorgungsdruckausgang
- 31: Anhängefahrzeug-Versorgungsdruckausgang
- 32: Zugfahrzeug-Steuerdruckausgang
- 33: Anhängefahrzeug-Steuerdruckausgang
- 34: seitliche Außenfläche Ventilblock
- 35: elektronische Steuerleitungen
- 36: Schnellentlüftungsventil
- 37: Bremsdruckausgang
- 38: Anhängersteuerleitung
- 39: Versorgungsdruckeingang Anhängersteuerventilsystem
- 40: obere Außenfläche Ventilblock

## Patentansprüche

1. Pneumatisches Ventilsystem (5) für ein Bremssystem (1) eines Zugfahrzeugs (2), das pneumatische Ventilsystem (5) umfassend
- einen Ventilblock (28), der einen Versorgungsdruckeingang (29), einen Zugfahrzeug-Versorgungsdruckausgang (30) und einen Zugfahrzeug-Steuerdruckausgang (32) aufweist,
- ein als Steuerventil (6) ausgebildetes erstes Wegeventil,
- ein als Redundanzventil (7) ausgebildetes zweites Wegeventil und
- ein als Bremsventil (10) ausgebildetes drittes Wegeventil,
wobei
- der Versorgungsdruckeingang (29) dazu eingerichtet ist, mit einer Druckluftquelle (9) des Bremssystems (1) verbunden zu werden,
- das Bremsventil (10) einerseits über ein Wechselventil (8) mit dem Steuerventil (6) und dem Redundanzventil (7) sowie andererseits mit dem Zugfahrzeug-Steuerdruckausgang (32) verbunden ist,
- der Versorgungsdruckeingang (29) mit dem Steuerventil (6) und dem Redundanzventil (7) verbunden ist, sodass Druckluft aus der Druckluftquelle (9) über das Steuerventil (6) oder das Redundanzventil (7) und stromabwärts über das Bremsventil (10) zu dem Zugfahrzeug-Steuerdruckausgang (32) strömen kann,
- der Versorgungsdruckeingang (29) mit dem Zugfahrzeug-Versorgungsdruckausgang (30) verbunden ist,
- der Zugfahrzeug-Versorgungsdruckausgang (30) dazu eingerichtet ist, mit einem Versorgungsdruckeingang (20) eines Zugfahrzeug-Relaisventils (11) zur Betätigung eines Bremszylinders (23) des Zugfahrzeugs (2) verbunden zu werden, und
- der Zugfahrzeug-Steuerdruckausgang (32) dazu eingerichtet ist, mit einem Steuerdruckeingang (19) des Zugfahrzeug-Relaisventils (11) verbunden zu werden.

2. Pneumatisches Ventilsystem (5) nach Anspruch 1, wobei
- der Ventilblock (28) ein Rückschlagventil (12) aufweist,
- das Rückschlagventil (12) den Versorgungsdruckeingang (29) mit dem Steuerventil (6) und dem Redundanzventil (7) verbindet, sodass Druckluft aus der Druckluftquelle (9) über das Steuerventil (6) oder das Redundanzventil (7) und stromabwärts über das Bremsventil (10) zu dem Zugfahrzeug-Steuerdruckausgang (32) strömen kann, und
- das Rückschlagventil (12) den Versorgungsdruckeingang (29) mit dem Zugfahrzeug-Versorgungsdruckausgang (30) verbindet und in umgekehrter Strömungsrichtung den Zugfahrzeug-Versorgungsdruckausgang (30) von dem Versorgungsdruckeingang (29) trennt.

3. Pneumatisches Ventilsystem (5) nach Anspruch 2, wobei
- der Ventilblock (28) einen Anhängefahrzeug-Versorgungsdruckausgang (31) und einen Anhängefahrzeug-Steuerdruckausgang (33) aufweist,
- der Anhängefahrzeug-Versorgungsdruckausgang (31) unter Umgehung des Rückschlagventils (12) mit dem Versorgungsdruckeingang (29) verbunden ist,
- der Anhängefahrzeug-Versorgungsdruckausgang (31) dazu eingerichtet ist, mit einem Versorgungsdruckeingang (39) eines Anhängersteuerventilsystems (16) für eine Anhängerbremse (3) eines Anhängefahrzeugs (4) verbunden zu werden, welches von dem Zugfahrzeug (2) gezogen wird, und
- der Anhängefahrzeug-Steuerdruckausgang (33) einerseits über das Wechselventil (8) mit dem Steuerventil (6) und dem Redundanzventil (7) verbunden ist, und andererseits dazu eingerichtet ist, mit einem Steuerdruckeingang (18) des Anhängersteuerventilsystems (16) verbunden zu werden.

4. Pneumatisches Ventilsystem (5) nach einem der Ansprüche 1 bis 3, wobei der Versorgungsdruckeingang (29), der Zugfahrzeug-Versorgungsdruckausgang (30), der Zugfahrzeug-Steuerdruckausgang (32), der Anhängefahrzeug-Versorgungsdruckausgang (31) und der Anhängefahrzeug-Steuerdruckausgang (33) auf derselben Außenfläche (34) des Ventilblocks (28) angeordnet sind.

5. Pneumatisches Ventilsystem (5) nach einem der vorstehenden Ansprüche, das pneumatische Ventilsystem (5) weiterhin umfassend eine elektronische Steuerungseinheit (25), die über elektronische Steuerungsleitungen (35) mit dem Steuerventil (6), dem Redundanzventil (7) und dem Bremsventil (10) verbunden ist, wobei
- das Steuerventil (6), das Redundanzventil (7) und das Bremsventil (10) Magnetventile sind,
- die Magnetventile (6, 7, 10) jeweils einen Elektromagneten (EM1, EM2) aufweisen,
- die elektronische Steuerungseinheit (25) dazu eingerichtet ist, die Elektromagnete (EM1, EM2) derart zu steuern, dass
- das Steuerventil (6) und das Redundanzventil (7) aus einem mechanisch vorgespannten geschlossenen Zustand in einen geöffneten Zustand und umgekehrt versetzt werden, und
- das Bremsventil (10) aus einem mechanisch vorgespannten geöffneten Zustand in einen geschlossenen Zustand und umgekehrt versetzt wird.

6. Pneumatisches Ventilsystem (5) nach Anspruch 5, wobei die elektronische Steuerungseinheit (25) nach Empfangen einer Bremstestanforderung dazu eingerichtet ist,
- die Elektromagnete (EM1) des Steuerventils (6) und des Redundanzventils (7) derart zu steuern, dass das Steuerventil (6) und das Redundanzventil (7) in den geöffneten Zustand versetzt werden, und
- den Elektromagneten (EM2) des Bremsventils (10) derart zu steuern, dass das Bremsventil (10) in den geschlossenen Zustand versetzt wird,
sodass die Anhängerbremse (3) deaktiviert und die Feststellbremse (24) des Zugfahrzeugs (2) aktiviert wird.

7. Pneumatisches Ventilsystem (5) nach Anspruch 5 oder 6, wobei die elektronische Steuerungseinheit (25) dazu eingerichtet ist,
- die Elektromagnete (EM1) des Steuerventils (6) und des Redundanzventils (7) derart zu steuern, dass das Steuerventil (6) und das Redundanzventil (7) in den geschlossenen Zustand versetzt werden, sodass keine Druckluft aus der Druckmittelquelle (9) über das Steuerventil (6) oder das Redundanzventil (7) und stromabwärts zum einen zu dem Anhängefahrzeug-Steuerdruckausgang (33) und zum anderen über das Bremsventil (10) zu dem Zugfahrzeug-Steuerdruckausgang (32) strömen kann, wodurch die Feststellbremse (24) des Zugfahrzeugs (2) und die Anhängerbremse (3) aktiviert werden können, und
- die Elektromagnete (EM1) des Steuerventils (6) und des Redundanzventils (7) derart zu steuern, dass das Steuerventil (6) und das Redundanzventil (7) in den geöffneten Zustand versetzt werden, sodass Druckluft aus der Druckmittelquelle (9) über das Steuerventil (6) oder das Redundanzventil (7) und stromabwärts zum einen zu dem Anhängefahrzeug-Steuerdruckausgang (33) und zum anderen über das Bremsventil (10) zu dem Zugfahrzeug-Steuerdruckausgang (32) strömen kann, wodurch die Feststellbremse (24) des Zugfahrzeugs (2) und die Anhängerbremse (3) deaktiviert werden können.

8. Pneumatisches Ventilsystem (5) nach einem der vorstehenden Ansprüche, wobei es sich bei dem Steuerventil (6), dem Redundanzventil (7) und dem Bremsventil (10) um Gleichteile handelt.

9. Pneumatisches Ventilsystem (5) nach einem der vorstehenden Ansprüche, wobei die elektronische Steuerungseinheit (25) dazu eingerichtet ist,
- die Elektromagnete (EM1) des Steuerventils (6) und des Redundanzventils (7) derart zu steuern, dass das Steuerventil (6) und das Redundanzventil (7) in den geschlossenen Zustand versetzt werden, sodass der Anhängefahrzeug-Steuerdruckausgang (33) über das Steuerventil (6) oder das Redundanzventil (7) mit einer drucklosen Umgebung (U) verbunden wird, und
- den Elektromagneten (EM2) des Bremsventils (10) derart zu steuern, dass das Bremsventil (10) in den geschlossenen Zustand versetzt wird, sodass der Zugfahrzeug-Steuerdruckausgang (32) mit der drucklosen Umgebung (U) verbunden wird.

10. Pneumatisches Ventilsystem (5) nach einem der vorstehenden Ansprüche, wobei ein Schnellentlüftungsventil (35) mit dem Zugfahrzeug-Relaisventils (11) verbunden ist, wobei das Schnellentlüftungsventil (35) dazu eingerichtet ist, Druckluft aus dem Bremszylinder (23) direkt in die drucklose Umgebung (U) abzulassen.
